# EUROPEAN PATENT APPLICATION

(11) **EP 4 516 583 A1**
(43) Date of publication of application: **05.03.2025**
(21) Application number: 23814672.4
(22) Date of filing: 24.02.2023
(51) Int. Cl.: B60N 3/02

(54) **VEHICLE GRAB RAIL ASSEMBLY AND VEHICLE**

(30) Priority: 30.05.2022 CN 202221359702 U
(71) Applicant: BYD Company Limited, Shenzhen, Guangdong 518118 (CN)
(72) Inventor: SHANGGUAN, Yigang, Shenzhen, Guangdong 518118 (CN); QIN, Qiongbo, Shenzhen, Guangdong 518118 (CN); WANG, Dahai, Shenzhen, Guangdong 518118 (CN); CHEN, Miancong, Shenzhen, Guangdong 518118 (CN); ZOU, Jiajian, Shenzhen, Guangdong 518118 (CN)
(74) Representative: Taor, Simon Edward William
(86) International application number: PCT/CN2023/078283
(87) International publication number: WO 2023/231473

(57) **Abstract**

A vehicle, having a vehicle grab rail assembly. The vehicle grab rail assembly includes a mounting base (1) and a rotating grab rail (2). The rotating grab rail (2) includes a fixing rod (21) and a movable rod (22). The movable rod (22) is movably connected to the fixing rod (21) in a length direction of the rotating grab rail (2). The fixing rod (21) can be rotatably connected to the mounting base (1) around a first rotating axis (L1) extending in a first direction (A) and a second rotating axis (L2) extending in a second direction (B) perpendicular to the first direction (A), so that the rotating grab rail (2) can be switched between a use state and a retracted state. In the use state, the rotating grab rail (2) extends in the first direction (A), and in the retracted state, the rotating grab rail (2) extends in the second direction (B).

## Description

### CROSS-REFERENCE TO RELATED APPLICATIONS

The present disclosure claims priority to Chinese Patent Application No. 202221359702.5 filed on May 30, 2022, which is incorporated herein by reference in its entirety.

### FIELD

The present disclosure relates to the field of vehicle grab rail technologies, and in particular, to a vehicle grabs rail assembly and a vehicle.

### BACKGROUND

A grab rail assembly can be installed on the fixed grab rail of vehicles (such as buses, coaches, or subways). The grab rail assembly provides passengers with a gripping position. However, in the related technology, the grab rail assembly is typically fixed in the use state. When no passengers are using the grab rail assembly on the vehicle, the grab rail assembly fixed in the use state occupies the space where passengers stand, thereby reducing the utilization rate of space within the vehicle.

### SUMMARY

The purpose of the present disclosure is to provide a vehicle grab rail assembly and the vehicle, wherein the vehicle grab rail assembly can avoid occupying the standing space of passengers, and the length of the rotating grab rail of the vehicle grab rail assembly is adjustable.

To achieve the above purpose, the present disclosure provides a vehicle grab rail assembly, including:
A mounting base;
A rotating grab rail, including:
   A fixing rod, wherein the fixing rod is rotatably connected to the mounting base along a first rotating axis extending in a first direction and a second rotating axis extending in a second direction, wherein the first direction is perpendicular to the second direction; and
   A movable rod, wherein the movable rod is movably connected to the fixing rod along the length direction of the rotating grab rail;
   Wherein the rotating grab rail can switch between a use state and a retracted state, in the use state, the rotating grab rail extends along the first direction, and in the retracted state, the rotating grab rail extends along the second direction.

In an embodiment, the rotating grab rail further includes a locking member and an elastic member. One end of the movable rod is inserted into the fixing rod. Multiple locking holes are formed on the fixing rod. The locking member and the elastic member are both arranged on the movable rod. A first through-hole is formed on the movable rod for the locking member to pass through. One end of the elastic member abuts against the locking member, and the elastic member is used to apply elastic force to the locking member to move it towards the fixing rod, so that the locking member can extend into the locking hole.

In an embodiment, the rotating grab rail further includes a sliding sleeve and a stop sleeve, wherein the sliding sleeve is installed at one end of the movable rod close to the mounting base, and the outer peripheral surface of the sliding sleeve slides with the inner peripheral surface of the fixing rod, and there is a gap between the outer peripheral surface of the movable rod and the inner peripheral surface of the fixing rod;
The stop sleeve is installed at one end of the fixing rod away from the mounting base, and the stop sleeve is used to stop the sliding sleeve.

In an embodiment, the vehicle grab rail assembly further includes a first shaft and a second shaft, wherein the first shaft extends along the first direction, the second shaft extends along the second direction. The second shaft is rotatably connected to the first shaft. One end of the first shaft is rotatably connected to the mounting base. The first rotating axis is the central axis of the first rotating shaft, and the second rotating axis is the central axis of the second rotating shaft;
A first groove and a second groove are formed on the mounting base, both of which are concaved along a third direction. The third direction is perpendicular to both the first direction and the second direction. The first groove extends in the first direction, and the second groove extends in the second direction. One end of the first groove is formed as a first open end that can be passed through by rotating grab rail, the other end of the first groove is connected to the second groove. One end of the second groove is formed as a second open end that can be passed through by the rotating grab rail;
In the use state, part of the rotating grab rail is accommodated within the first groove, and in the retracted state, part of the rotating grab rail is accommodated within the second groove.

In an embodiment, the first groove has two first sidewalls opposite to each other in the second direction and a first bottom wall located between the two first sidewalls. First elastic limiting members are disposed on both first sidewalls, and a first elastic buffer member is disposed on the first bottom wall. In the use state, the rotating grab rail is clamped between the two first elastic limiting members; and/or,
The second groove has two second sidewalls opposite to each other in the first direction and a second bottom wall located between the two second sidewalls. Second elastic limiting members are disposed on both second sidewalls, and a second elastic buffer member is disposed on the second bottom wall. In the retracted state, the rotating grab rail is clamped between the two second elastic limiting members.

In an embodiment, the mounting base includes a first partition and a second partition. The first partition is provided with a mounting plate, and one end of the first shaft is rotatably connected to the mounting plate. A first notch is formed on the first partition. A second notch is formed on the second partition, which is detachably connected to the first partition. And the first groove was defined by the second partition together with the first notch, the second groove was defined by the second notch together with the mounting plate.

In an embodiment, the mounting base is provided with a through hole which is designed for the fixed grab rail of the vehicle to pass through. The mounting base includes a first partition and a third partition, with the first partition having a first half-hole and the third partition having a second half-hole. The first partition is detachably connected to the third partition, so that the first half-hole and the second half-hole can be joined together to form the through-hole.

In an embodiment, the vehicle grab rail assembly further includes a limiting member, wherein a limiting groove is formed on the limiting member, and the limiting groove extends along the second direction. In the retracted state, one end of the movable rod away from the fixing rod is accommodated in the limiting groove.

In an embodiment, the limiting groove has two third sidewalls opposite to each other in the first direction and a third bottom wall located between the two third sidewalls. Third elastic limiting members are disposed on both third sidewalls, and a third elastic buffer member is disposed on the third bottom wall. In the retracted state, the movable rod is clamped between the two third elastic limit members at one end away from the fixing rod.

On the other hand, the present disclosure also provides a vehicle including the aforementioned vehicle grab rail assembly.

In an embodiment, the vehicle further includes a backrest. The mounting base of the vehicle grab rail assembly is located on one side of the backrest. In the use state, the rotating grab rail is positioned to the side of the backrest, and in the retracted state, the rotating grab rail is positioned behind the backrest.

In an embodiment, the vehicle further includes a fixed grab rail extending along a third direction, which is the up-down direction of the vehicle. The first direction is the front-rear direction of the vehicle, and the second direction is the left-right direction of the vehicle. The fixed grab rail is spaced apart from the side of the vehicle body along the left- right direction. The mounting base of the vehicle grab rail assembly is installed on the fixed grab rail.

A bent stopper is formed on the fixed grab rail, located above the mounting base. The distance between the bent stopper and the mounting base in the vertical direction is greater than the minimum length of the rotating grab rail of the vehicle grab rail assembly and less than or equal to the distance between the bent stopper and the side of the vehicle body in the left-right direction.

In the vehicle grab rail assembly provided by this disclosure, the fixing rod of the rotating grab rail can rotate relative to the mounting base around a first rotating axis (extending along the first direction) and also rotate relative to the mounting base around a second rotating axis (extending along the second direction perpendicular to the first direction), thereby allowing the rotating grab rail to switch between the use state and the retracted state. When a passenger needs to use the rotating grab rail, they can rotate the rotating grab rail to the use state, providing a gripping position for the passenger. When the passenger does not need to use the rotating grab rail, they can rotate it to the retracted state, avoiding the rotating grab rail occupying the standing space of the passenger and improving the space utilization in the vehicle. Moreover, since the movable rod of the rotating grab rail is movably connected to the fixing rod along the length direction of the rotating grab rail, when the rotating grab rail is in the use state, the movable rod can be moved along the fixing rod to adjust the length of the rotating grab rail. That is, the overall length of the rotating grab railis adjustable, allowing the length of the rotating grab rail to be adjusted according to the passenger's needs, thereby enhancing the applicability of the rotating grab rail.

Other features and advantages of the present disclosure are provided in the following detailed descriptions.

### BRIEF DESCRIPTION OF THE DRAWINGS

The aforementioned and/or additional aspects and advantages of the present disclosure will become apparent and easily understandable from the description of the embodiments in combined with the accompanying drawings below, wherein:
Figure 1 is a partial schematic diagram of an interior of a vehicle according to an embodiment of the present disclosure, wherein the rotating grab rail is in a retracted state.
Figure 2 is a partial schematic diagram of an interior of a vehicle according to an embodiment of the present disclosure, wherein the rotating grab rail is in a use state.
Figure 3 is an exploded view of a vehicle grab rail assembly according to an embodiment of the present disclosure.
Figure 4 is a partial cross-sectional view of a rotating grab rail of the vehicle grab rail assembly according to an embodiment of the present disclosure.
Figure 5 is an enlarged view of portion D in Figure 4.
Figure 6 is a perspective view of a locking member of a vehicle grab rail assembly according to an embodiment of the present disclosure.
Figure 7 is a perspective view of a sliding sleeve of a vehicle grab rail assembly according to an embodiment of the present disclosure.
Figure 8 is an enlarged view of portion E in Figure 4.
Figure 9 is a perspective view of a stop sleeve of the vehicle grab rail assembly according to an embodiment of the present disclosure.
Figure 10 is an assembly diagram of a vehicle grab rail assembly according to an embodiment of the present disclosure.
Figure 11 is an enlarged view of portion F in Figure 10.
Figure 12 is an exploded view of a mounting base of the vehicle grab rail assembly according to an embodiment of this disclosure, wherein the fixed grab rail is shown.
Figure 13 is a perspective diagram of a first partition of the vehicle grab rail assembly according to an embodiment of the present disclosure.
Figure 14 is a perspective view of a second partition of the vehicle grab rail assembly according to an embodiment of the present disclosure.
Figure 15 is a perspective view of a third partition of the vehicle grab rail assembly according to an embodiment of the present disclosure.
Figure 16 is a perspective view of a first shaft of the vehicle grab rail assembly according to an embodiment of the present disclosure.
Figure 17 is a partial schematic diagram of an interior of a vehicle according to an embodiment of the present disclosure, wherein a limiting member is shown.
Figure 18 is an enlarged view of portion G in Figure 17.
Figure 19 is a partial side schematic view of a interior of a vehicle according to an embodiment of the present disclosure.

### DETAILED DESCRIPTION

The embodiments of the present disclosure are described in detail below, examples of which are shown in the figures, wherein the same or similar reference numerals represent the same or similar elements or elements having the same or similar functions throughout. The embodiments described by way of reference to the figures are exemplary and are intended to explain the present disclosure and should not be construed as limitations on the disclosure.

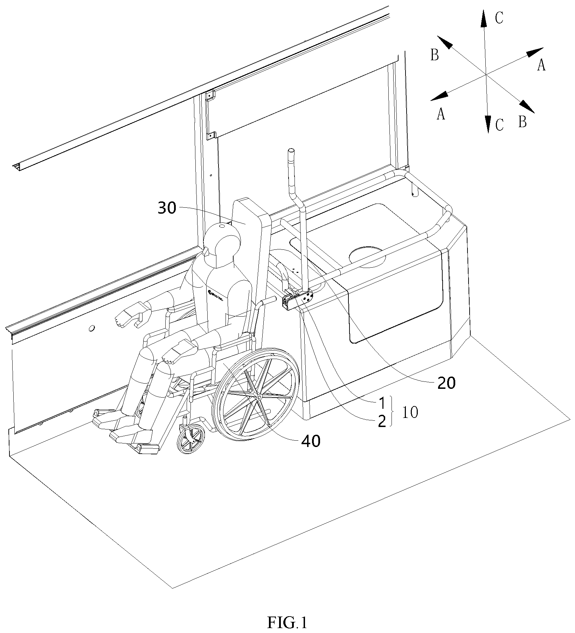

In the present disclosure, unless otherwise specified, orientation terms such as "first direction A, second direction B, third direction C" refer specifically to those shown in Figures 1 to 3; "up, down, left, right, front, rear" generally refer to the up, down, left, right, front, and rear of a vehicle under normal driving conditions; "inside and outside" refer to the inside and outside of the corresponding structural outline.

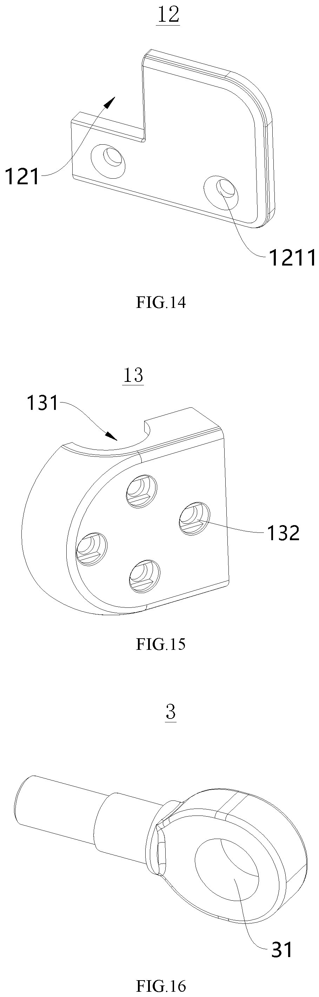

As shown in Figures 1 to 19, according to a first aspect of the present disclosure, the present disclosure provides a vehicle grab rail assembly 10, including mounting base 1 and a rotating grab rail 2. The rotating grab rail 2 includes a fixing rod 21 and a movable rod 22. The fixing rod 21 can be rotatably connected to the mounting base 1 around a first rotating axis L1 extending in a first direction A and a second rotating axis L2 extending in a second direction B. The first direction A is perpendicular to the second direction B. The movable rod 22 is movably connected to the fixing rod 21 along the length direction of the rotating grab rail 2. Wherein, the rotating grab rail 2 can switch between a use state and a retracted state. In the use state, the rotating grab rail 2 extends in the first direction A, and in the retracted state, the rotating grab rail 2 extends in the second direction B.

In the vehicle grab rail assembly 10 of the present disclosure, when the rotating grab rail 2 is in the retracted state, it extends in the second direction B. During the process of switching the rotating grab rail 2 from the retracted state to the use state, the fixing rod 21 of the rotating grab rail 2, which extends in the second direction B, can first rotate around the first rotating axis L1 extending in the first direction A, and then rotate around the second rotating axis L2 extending in the second direction B, which is perpendicular to the first direction A, so as to rotate the rotating grab rail 2 to a position extending in the first direction A, that is, to rotate the rotating grab rail 2 to the use state.

Through the above technical solution, in the vehicle grab rail assembly 10 provided by the present disclosure, the fixing rod 21 of the rotating grab rail 2 can rotate around the first rotating axis L1 (extending in the first direction A) relative to the mounting base 1, and can also rotate around the second rotating axis L2 (extending in the second direction B, which is perpendicular to the first direction A) relative to the mounting base 1, thereby allowing the rotating grab rail 2 to switch between the use state and the retracted state. When a passenger needs to use the rotating grab rail 2, they can rotate it to the use state, thereby providing a gripping position for the passenger; when the passenger does not need to use the rotating grab rail 2, they can rotate it to the retracted state, thereby avoiding the rotating grab rail 2 occupying the standing space of the passenger and improving the space utilization in the vehicle. Moreover, since the movable rod 22 is movably connected to the fixing rod 21 along the length direction of the rotating grab rail 2, when the rotating grab rail 2 is in the use state, the movable rod 22 can be moved along the fixing rod 21 to adjust the length of the rotating grab rail 2. That is, the overall length of the rotating grab rail 2 is adjustable, allowing the length of the rotating grab rail 2 to be adjusted according to the passenger's needs, thereby enhancing the applicability of the rotating grab rail 2.

The vehicle grab rail assembly 10 provided by the present disclosure can be used by any passenger inside the vehicle who needs a gripping position, and the disclosure does not limit this. In an embodiment, the vehicle grab rail assembly 10 provided by the present disclosure can be set in the wheelchair area of the vehicle, thereby providing a gripping position for wheelchair users. Since the rotating grab rail 2 in the vehicle grab rail assembly 10 can switch between a use state and a retracted state, the rotating grab rail 2 can be placed in the retracted state when the wheelchair 40 is not entering the wheelchair area or when the wheelchair 40 needs to leave the wheelchair area. This avoids the grab rail assembly 10 from blocking the wheelchair 40 from entering or leaving the wheelchair area, allowing the wheelchair 40 to enter or leave the wheelchair area from any direction. When the wheelchair 40 is parked in the wheelchair area, the rotating grab rail 2 can be rotated to the use state, thereby providing a gripping position for the wheelchair user.

Here, it should be noted that the first direction A and the second direction B of the present disclosure can be any direction, and the disclosure does not limit this. In an embodiment, the first direction A can be the front-rear direction of the vehicle, and the second direction B can be the left-right direction of the vehicle. When the rotating grab rail 2 is in the retracted state, it can extend in the left-right direction. When the rotating grab rail 2 is in the use state, it can extend in the front-rear direction. During the process of switching the rotating grab rail 2 from the retracted state to the use state, the fixing rod 21 of the rotating grab rail 2, which extends in the left-right direction, can first rotate around the first rotating axis L1 extending in the front-rear direction to an intermediate state. At this point, the rotating grab rail 2 in the intermediate state extends in the up-down direction of the vehicle. Then, the rotating grab raill 2 extending in the up-down direction can rotate around the second rotating axis L2 extending in the left-right direction, so as to rotate the rotating grab rail 2 to a position extending in the front-rear direction, that is, to rotate the rotating grab rail 2 to the use state..

The rotating grab rail 2 can be connected to the fixing rod 21 in any appropriate manner so that the movable rod 22 can move along the length direction of the rotating grab rail 2. In an embodiment, one end of the movable rod 22 can be movably inserted into the fixing rod 21, or one end of the fixing rod 21 can be movably inserted into the movable rod 22, and the disclosure does not limit this.

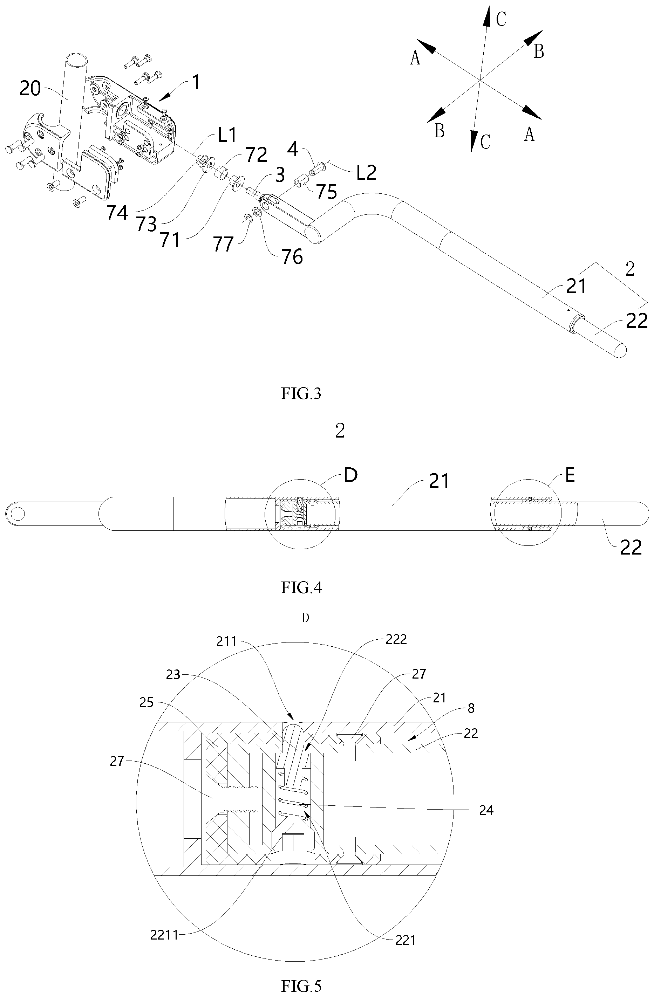

Since the movable rod 22 is movably connected to the fixing rod 21, in order to lock the movable rod 22 to the fixing rod 21, in an embodiment, as shown in Figures 4 to 6, the rotating grab rail 2 can also include a locking member 23 and an elastic member 24. One end of the movable rod 22 can be movably inserted into the fixing rod 21, and the fixing rod 21 can form multiple locking holes 211. The locking member 23 and the elastic member 24 can be disposed inside the movable rod 22. A first through-hole 222 is formed on the movable rod 22 for the locking member 23 to pass through. One end of the elastic member 24 can abut against the locking member 23, and the elastic member 24 is used to apply an elastic force to the locking member 23 to move it towards the fixing rod 21, so that the locking member 23 can extend into the locking hole 211.

When adjusting the length of the rotating grab rail 2, since the movable rod 22 is movably connected to the fixing rod 21, the overall length of the rotating grab rail 2 can be adjusted by pulling the movable rod 22. As the movable rod 22 is equipped with a locking member 23 and an elastic member 24, with the elastic member 24 abutting against the locking member 23, the elastic member 24 can apply an elastic force to the locking member 23 to move it towards the fixing rod 21. When the movable rod 22 is pulled to move relative to the fixing rod 21, and the first through-hole 222 on the movable rod 22 is aligned with the locking hole 211 on the fixing rod 21, the locking member 23 can pass through the first through-hole 222 on the movable rod 22 and enter the locking hole 211 on the fixing rod 21 under the elastic force of the elastic member 24. This locks the movable rod 22 to the fixing rod 21, i.e., fixes the position of the movable rod 22, allowing the rotating grab rail 2 to remain at the adjusted length, thus facilitating the use for passengers.

Since multiple locking holes 211 can be formed on the fixing rod 21, and these locking holes 211 can be spaced along the length direction of the rotating grab rail 2, when the movable rod 22 is pulled to move relative to the fixing rod 21, the locking member 23 can pass through the first through-hole 222 on the movable rod 22 and can enter any one of the multiple locking holes 211 on the fixing rod 21, thereby allowing the rotating grab rail 2 to be adjusted to different lengths.

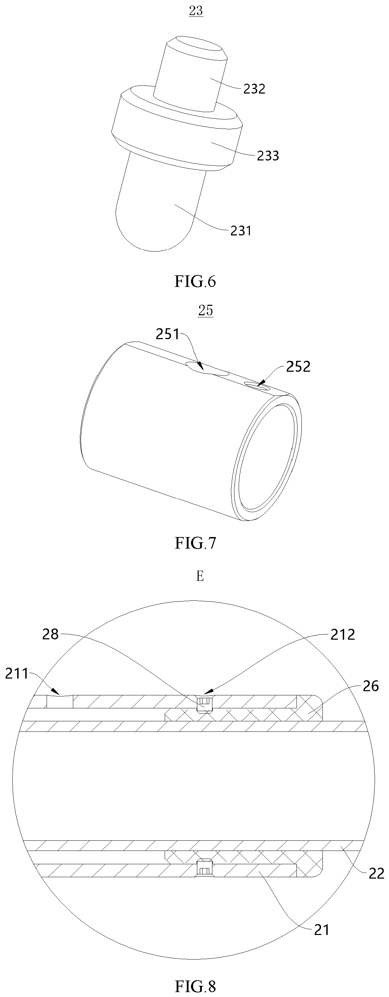

In an embodiment, as shown in Figures 5 and 6, the locking member 23 can include a locking body and a stop flange 233. The stop flange 233 can protrude radially outward from the locking body. The locking body can include a first section 231 and a second section 232, with the stop flange 233 located between the first section 231 and the second section 232. One end of the elastic member 24 can pass through the first section 231 and abut against the stop flange 233, while the other end of the elastic member 24 can abut against the inner wall of the movable rod 22. When the first through-hole 222 on the movable rod 22 is not aligned with the locking hole 211 on the fixing rod 21, the elastic member 24 is in a compressed state. When the movable rod 22 is pulled to move relative to the fixing rod 21, causing the first through-hole 222 on the movable rod 22 to align with the locking hole 211 on the fixing rod 21, the elastic force stored in the elastic member 24 in its compressed state is released, thereby allowing the elastic member 24 to apply an elastic force to the stop flange 233, enabling the second section 232 of the locking body to pass through the first through-hole 222 on the movable rod 22 and enter the locking hole 211 on the fixing rod 21, thus locking the movable rod 22.

In an embodiment, as shown in Figures 5 and 6, a containing cavity 221 is formed in the movable rod 22, within which the locking member 23 and the elastic member 24 can be disposed. An inward protrusion 2211 is formed on the wall of the containing cavity 221. One end of the elastic member 24 can pass through the first section 231 of the locking body, and the other end of the elastic member 24 can pass through the protrusion 2211.

To reduce the sliding friction between the movable rod 22 and the fixing rod 21, in an embodiment, as shown in Figures 4, 5, and 7, the rotating grab rail 2 can further include a sliding sleeve 25. The sliding sleeve 25 can be positioned between the movable rod 22 and the fixing rod 21. And the outer peripheral surface of the sliding sleeve slides with the inner peripheral surface of the fixing rod. There is a gap 8 between the outer peripheral surface of the movable rod 22 and the inner peripheral surface of the fixing rod 21. Due to the presence of the sliding sleeve 25 between the movable rod 22 and the fixing rod 21, and the slidable engagement of the outer peripheral surface of the sliding sleeve 25 with the inner peripheral surface of the fixing rod 21, the movable rod 22 can slide within the fixing rod 21 through the sliding sleeve 25. In the part of the movable rod 22 where the sliding sleeve 25 is installed, the movable rod 22 can slide within the fixing rod 21 through the sliding sleeve 25. In the part of the movable rod 22 where the sliding sleeve 25 is not installed, since the sliding sleeve 25 is mounted on the outer side of the movable rod 22, there is a gap 8 between the outer peripheral surface of the movable rod 22 and the inner peripheral surface of the fixing rod 21. That is, during the movement of the movable rod 22 relative to the fixing rod 21, the sliding sleeve 25 can prevent direct contact between the movable rod 22 and the fixing rod 21, thereby reducing friction and facilitating the reduction of frictional force when the movable rod 22 is moved.

The sliding sleeve 25 can be installed at any appropriate location on the movable rod 22. For example, in one embodiment of the present disclosure, as shown in Figure 5, the sliding sleeve 25 can be installed at the end of the movable rod 22 close to the mounting base 1. In this way, the movable rod 22 can slide against the side wall of the inner peripheral surface of the fixing rod 21 through the sliding sleeve 25, and also against the top wall of the inner peripheral surface of the fixing rod 21, thereby reducing the friction between the movable rod 22 and the top wall of the inner peripheral surface of the fixing rod 21 when the movable rod 22 is retracted into the fixing rod 21.

In other embodiments, the movable rod 22 can also be inserted through the sliding sleeve 25, allowing the sliding sleeve 25 to be installed at a mid-position within the movable rod 22.

In an embodiment, as shown in Figure 7, the sliding sleeve 25 can have a second through-hole 251 formed for the locking member 23 to pass through.

In an embodiment, as shown in Figures 5 and 7, the rotating grab rail 2 may include a first fastener 27, a first connection hole 252 is formed on the sliding sleeve 25, and a second connection hole is be formed on the movable rod 22. The first fastener 27 can pass through the first connection hole 252 and be connected to the second connection hole, so that the sliding sleeve 25 is installed on the movable rod 22.

In order to prevent the sliding sleeve 25 from slipping out of the fixing rod 21, in an embodiment, as shown in Figures 4 and 8, a stop sleeve 26 can be installed at one end of the fixing rod 21 away from the mounting base 1 and used to stop the sliding sleeve 25. When adjusting the length of the rotating grab rail 2, the movable rod 22 moves towards the end away from the mounting base 1. As a stop sleeve 26 is installed at the end of the fixing rod 21 away from the mounting base 1, when the movable rod 22 is pulled to slide in the fixing rod 21, the stop sleeve 26 can be used to stop the sliding sleeve 25 moving towards the stop sleeve 26, thereby preventing the sliding sleeve 25 from slipping out of the fixing rod 21, that is, preventing the sliding sleeve 25 from slipping out of the fixing rod 21.

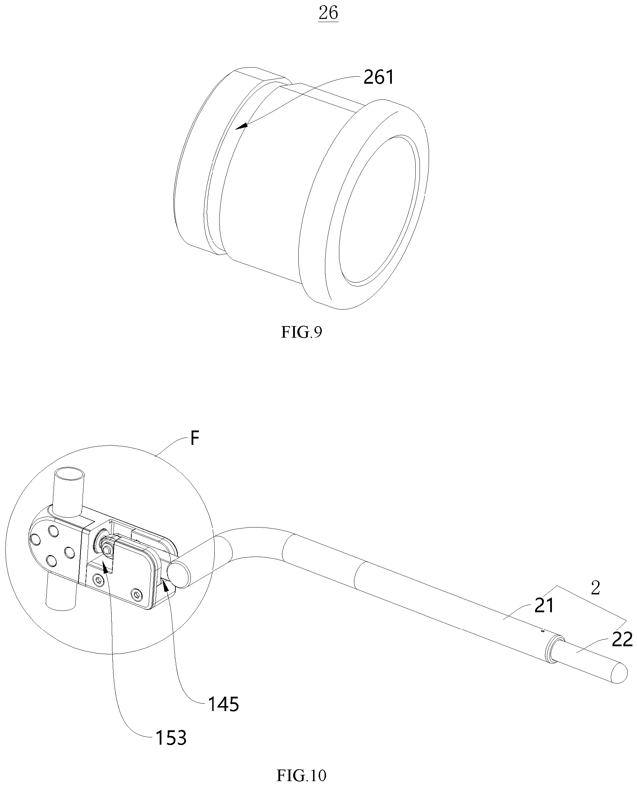

In an embodiment, as shown in Figures 8 and 9, the rotating grab rail 2 can include a second fastener 28, and an installation groove 261 can be formed on the stopper. The fixing rod 21 can have a third connection hole 212, and the second fastener 28 can pass through the third connection hole 212 and be connected to the installation groove 261, thereby installing the stop sleeve 26 on the fixing rod 21.

To facilitate the movement of the movable rod 22, in an embodiment, the rotating grab rail 2 can further include a drive device. The drive device can be provided inside the fixing rod 21 and connected to the movable rod 22. The drive device is used to drive the movable rod 22 relative to the fixing rod 21. When the rotating grab rail 2 is rotated to the use state, the drive device can be controlled to drive the movable rod 22 towards the outside of the fixing rod 21, thereby adjusting the length of the rotating grab rail 2. When the rotating grab rail 2 is moved away from the position of the use state, the drive device can be controlled to drive the movable rod 22 towards the inside of the fixing rod 21, thereby allowing the movable rod 22 to be retracted into the fixing rod 21, avoiding the rotating grab rail 2 from occupying space.

The drive device can be a cylinder, a hydraulic cylinder, or a linear motor, and the present disclosure does not limit this.

In the rotating grab rail 2 of the present disclosure, the fixing rod 21 can be achieved by any appropriate means to rotate relative to the mounting base 1 along the first rotating axis L1 and the second rotating axis L2. For example, in one embodiment, one end of the fixing rod 21 can be formed into a ball head, and the mounting base 1 can have a ball socket that matches the ball head, so that the fixing rod 21 can rotate relative to the mounting base 1 by 360°, that is, the fixing rod 21 can rotate relative to the mounting base 1 along the first rotating axis L1 and the second rotating axis L2.

In another embodiment, as shown in Figure 3, the vehicle grab rail assembly 10 can further include a first shaft 3 and a second shaft 4. The first shaft 3 can extend in the first direction A, and the second shaft 4 can extend in the second direction B. The second shaft 4 can be rotatably connected to the first shaft 3, and one end of the first shaft 3 can be rotatably connected to the mounting base 1. The first rotating axis L1 is the central axis of the first shaft 3, and the second rotating axis L2 is the central axis of the second shaft 4. Since the first rotating axis L1 is the central axis of the first shaft 3, the first shaft 3, which is rotatably connected to the mounting base 1, can rotate relative to the mounting base 1 along its own central axis, thereby allowing the rotating grab rail 2 to rotate around the first rotating axis L1. Since the second rotating axis L2 is the central axis of the second shaft 4, the second shaft 4, which is rotatably connected to the first shaft 3, can rotate relative to the first shaft 3 along its own central axis, thereby allowing the rotating grab rail 2 to rotate around the second rotation axis L2.

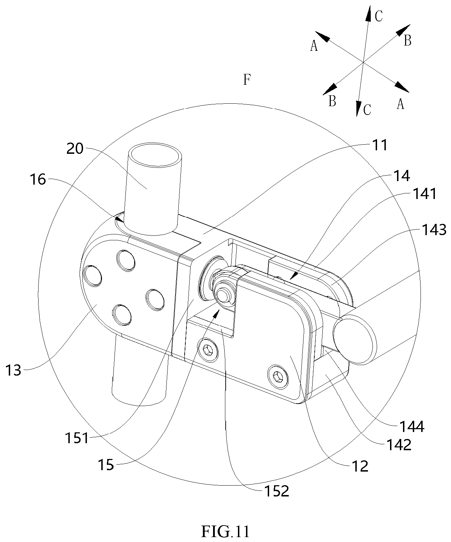

To provide space within the mounting base 1 for accommodating the rotating grab rail 2, in an embodiment, as shown in Figures 10 and 11, A first groove and a second groove are formed on the mounting base. The first groove 14 and the second groove 15 can both be concaved along a third direction. The third direction is perpendicular to both the first direction A and the second direction B. The first groove 14 extends along the first direction A, and the second groove 15 extends along the second direction B. One end of the first groove 14 is formed as a first open end 145 that can be passed through by rotating grab rail 2, the other end of the first groove 14 is connected to the second groove 15. One end of the second groove 15 is formed as a second open end 153 that can be passed through by the rotating grab rail 2.In the use state, part of the rotating grab rail 2 is accommodated within the first groove 14, and in the retracted state, part of the rotating grab rail 2 is accommodated within the second groove 15.

When the rotating grab rail 2 is in the use state, the rotating grab rail 2 can extend along the first direction A, and a portion of the rotating grab rail 2 can be accommodated within the first groove 14 extending along the first direction A. Another portion of the rotating grab rail 2 can pass through the first open end 145 of the first groove 14, thus extending out from the mounting base 1 to provide a gripping position for passengers. When the rotating grab rail 2 is in the retracted state, the rotating grab rail 2 can extend along the second direction B, and a portion of the rotating grab rail 2 can be accommodated within the second groove 15 extending along the second direction B. Another portion of the rotating grab rail 2 can extend out from the second open end 153 of the second groove 15.

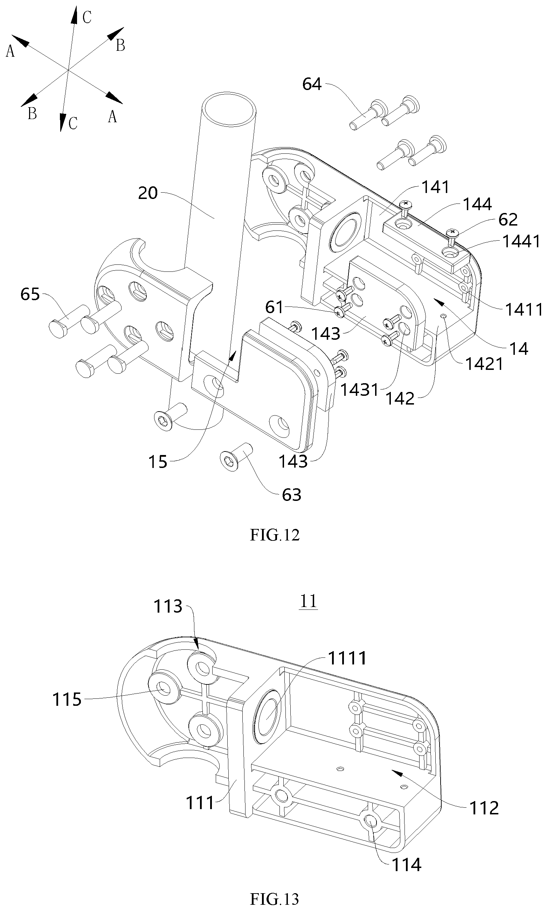

To prevent the rotating grab rail 2 accommodated in the first groove 14 from shaking and making noise during the vehicle's driving, in an embodiment, as shown in Figure 12, the first groove 14 can have two first sidewalls 141 opposite each other in the second direction B, and a first bottom wall 142 located between the two first sidewalls 141. First elastic limiting members 143 are disposed on both first sidewalls 141, and a first elastic buffer member 144 is disposed on the first bottom wall 142. In the use state, the rotating grab rail 2 is clamped between the two first elastic limiting members 143.

When the rotating grab rail 2 is in the use state, due to the presence of the first elastic limiting members143 on both first sidewalls 141 of the first groove 14, the rotating grab rail 2 accommodated in the first groove 14 can be clamped between the two first elastic limiting members 143. Under the clamping force of the two first elastic limiting members 143, the rotating grab rail 2 can be maintained in the use state for passengers to grip, and it can prevent the rotating grab rail 2 from shaking and making noise relative to the first groove 14 during vehicle driving. The first bottom wall 142 of the first groove 14 is provided with a first elastic buffer member 144, which can provide a buffering force for the rotating grab rail 2 when it falls into the first groove 14. By enveloping the rotating grab rail 2 accommodated in the first groove 14 with the two first elastic limiting members143 and the first elastic buffer member 144, it can prevent the rotating grab rail 2 from directly contacting the two first sidewalls 141 and the first bottom wall 142 of the first groove 14, and from knocking against the first sidewalls 141 and the first bottom wall 142 during vehicle driving.

In an embodiment as shown in Figures 11 and 12, the vehicle grab rail assembly 10 can further include a third fastener 61 and a fourth fastener 62. The first elastic limiting members 143 can be provided with a fourth connection hole 1431, and the first sidewall 141 can be provided with a fifth connection hole 1411. The third fastener 61 can pass through the fourth connection hole 1431 and be connected to the fifth connection hole 1411, thereby installing the first elastic limiting member 143 on the first sidewall 141; the first elastic buffer member 144 can be provided with a sixth connection hole 1441, and the first bottom wall 142 can be provided with a seventh connection hole 1421. The fourth fastener 62 can pass through the sixth connection hole 1441 and be connected to the seventh connection hole 1421, thereby installing the first elastic buffer member 144 on the first bottom wall 142.

To prevent the rotating grab rail 2 accommodated in the second groove 15 from shaking and making noise during the vehicle's driving, in an embodiment, as shown in Figures 11 and 12, the second groove 15 can have two second sidewalls 151 opposite each other along the first direction A and a second bottom wall 152 located between the two second sidewalls 151. Second elastic limiting members are disposed on both second sidewalls 151, and a second elastic buffer member is disposed on the second bottom wall 152. In the retracted state, the rotating grab rail 2 is clamped between the two second elastic limiting members.

When the rotating grab rail 2 is in the retracted state, due to the presence of the second elastic limiting members on both second sidewalls 151 of the second groove 15, the rotating grab rail 2 accommodated in the second groove 15 can be clamped between the two second elastic limiting members. Under the clamping force of the two second elastic limiting members, the rotating grab rail 2 can be maintained in the retracted state, and it can prevent the rotating grab rail 2 from shaking and making noise relative to the second groove 15 during vehicle driving. The second bottom wall 152 of the second groove 15 can be provided with a second elastic buffer member, which can provide a buffering force for the rotating grab rail 2 when it falls into the second groove 15. By enveloping the rotating grab rail 2 accommodated in the second groove 15 with the two second elastic limiting members and the second elastic buffer member, it can prevent the rotating grab rail 2 from directly contacting the two second sidewalls 151 and the second bottom wall 152 of the second groove 15, and from knocking against the second sidewalls 151 and the second bottom wall 152 during vehicle driving.

To prevent the rotating grab rail 2 from shaking and making noise when switching between the first groove 14 and the second groove 15 during the vehicle's driving. In an embodiment, as shown in Figures 11 and 12, the first sidewalls 141 can be provided with first elastic limiting members 143, and the first bottom wall 142 can be provided with a first elastic buffer member 144. Similarly, the second side walls 151 can be provided with second elastic limiting members, and the second bottom wall 152 can be provided with a second elastic buffer member, so that the rotating grab rail 2 does not produce rattling and noise when it is in either the first groove 14 or the second groove 15.

In an embodiment, the first elastic limiting member 143, the first elastic buffer member 144, the second elastic limiting member, and the second elastic buffer member can all be rubber pads.

To facilitate cleaning the first groove 14 and the second groove 15, in an embodiment, as shown in Figures 11, 13, and 14, the mounting base 1 can include a first partition 11 and a second partition 12. The first partition 11 can be provided with a mounting plate 111, and one end of the first shaft 3 can be rotatably connected to the mounting plate 111. A first notch 112 is formed on the first partition 11. A second notch 121 is formed on the second partition 12 which is detachably connected to the first partition 11. And the first groove 14 is defined by the second partition 12 together with the first notch 112, the second groove 15 is defined by the second notch 121 together with the mounting plate 111.

Since one end of the first shaft 3 can be rotatably connected to the mounting plate 111 of the first partition 11, when the first shaft 3 rotates along its own central axis relative to the mounting plate 111, it can rotate the rotating grab rail 2 along the first rotating axis L1.

The first groove 14 is defined by the first notch 112 formed on the first partition 11 together with the second partition 12, and the second groove 15 is defined by the second notch 121 formed on the second partition 12 together with the mounting plate 111 formed on the first partition 11. Since the second partition 12 can be detachably connected to the first partition 11, it can be convenient to clean the first groove 14 and the second groove 15 by detaching the second partition 12 from the first partition 11.

In an embodiment, as shown in Figure 12, the vehicle grab rail assembly 10 can further include a fifth fastener 63. The second partition 12 can be provided with an eighth connection hole 1211, and the first partition 11 can be provided with a ninth connection hole 114. The fifth fastener 63 can pass through the eighth connection hole 1211 and be connected to the ninth connection hole 114, thereby enabling the second partition 12 to be detachably connected to the first partition 11.

In an embodiment, as shown in Figures 3 and 13, the vehicle grab rail assembly 10 can further include a first shaft sleeve 71, a second shaft sleeve 72, a first gasket 73, and a locking nut 74. The first shaft sleeve 71 can be mounted on the first shaft 3, and the mounting plate 111 can be provided with a first mounting hole 1111. The second shaft sleeve 72 can be arranged within the first mounting hole 1111. The first shaft sleeve 71, which is mounted on the first shaft 3, can be passed through the second shaft sleeve 72 together with one end of the first shaft 3. The end of the first shaft 3 passing through the second shaft sleeve 72 can be fitted with the first gasket 73. The first shaft 3 is threaded with a locking nut 74, which is used to axially lock the first shaft 3.

In an embodiment, as shown in Figures 3, 13, and 16, the vehicle grab rail assembly 10 can further include a third shaft sleeve 75, a second gasket 76, and a locking ring 77. The end of the first shaft 3 that does not pass through the first mounting hole 1111 can be formed with a second mounting hole 31. The third shaft sleeve 75 can be arranged within the second mounting hole 31. One end of the second shaft 4 can pass through the third shaft sleeve 75 and be fitted with the second gasket 76. The end of the second shaft 4 passing through the second mounting hole 31 can be formed with a groove. The locking ring 77 can be engaged with the groove to axially lock the second shaft 4.

In an embodiment, both the second shaft sleeve 72 and the third shaft sleeve 75 can be made of nylon material.

To facilitate the installation of the mounting base 1 onto the fixed grab rail 20 of the vehicle, in an embodiment, as shown in Figures 11, 13, and 15, the mounting base 1 can be provided with a through hole 16. The through hole 16 is designed for the fixing grab rail 20 of the vehicle to pass through. The mounting base 1 includes a first partition 11 and a third partition 13. The first partition 11 is provided with a first half-hole 113, and the third partition 13 is provided with a second half-hole 131. The first partition 11 is detachably connected to the third partition 13, so that the first half-hole 113 and the second half-hole 131 can be assembled to form the through hole 16.

The through hole 16 for the fixed grab rail 20 of the vehicle to pass through is assembled from the first half-hole 113 formed on the first partition 11 and the second half-hole 131 formed on the third partition 13. This can reduce the manufacturing precision requirements for the first half-hole 113 and the second semi-hole 131, thus facilitating the production of the mounting base 1. The first partition 11 can be detachably connected to the third partition 13. By removing the first partition 11 from the third partition 13, the mounting base 1 can be detached from the fixed handrail rod 20, which can facilitate the maintenance of the removed mounting base 1.

In an embodiment, as shown in Figures 12, 13, and 15, the vehicle grab rail assembly 10 can further include a sixth fastener 64 and a seventh fastener 65. The first partition 11 can be provided with a tenth connection hole 115, and the third partition 13 can be provided with an eleventh connection hole 132. The sixth fastener 64 can pass through the tenth connection hole 115, and the seventh fastener 65 can pass through the eleventh connection hole 132. The sixth fastener 64 can be connected to the seventh fastener 65, thereby enabling the first partition 11 to be detachably connected to the third partition 13.

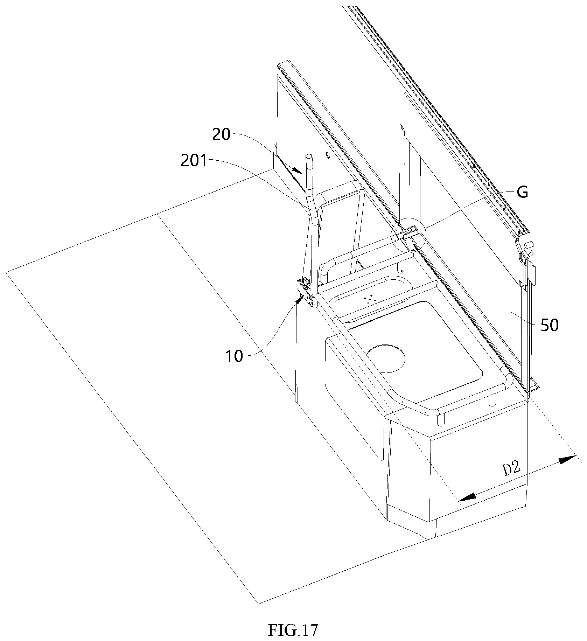

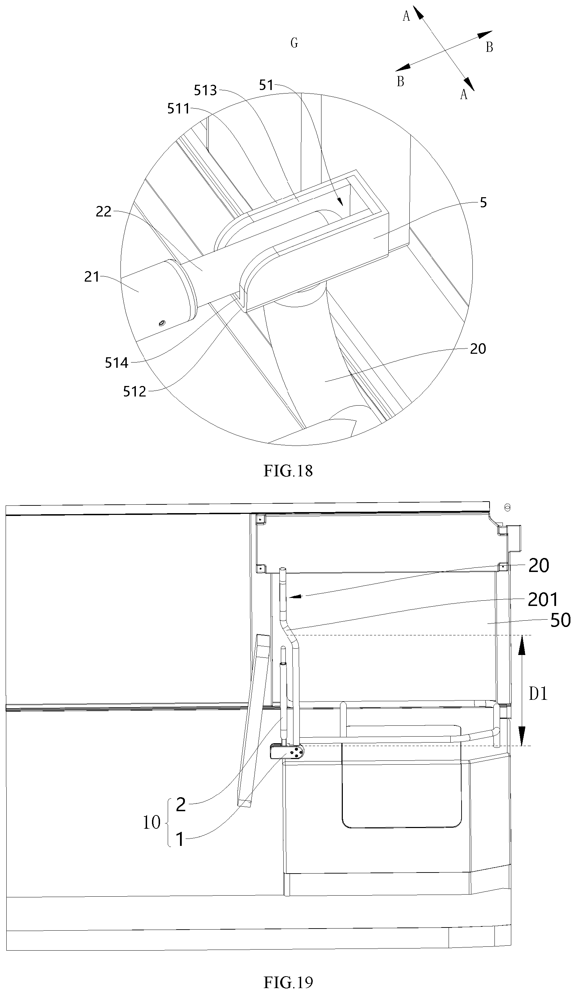

In an embodiment, as shown in Figures 17 and 18, the vehicle grab rail assembly 10 can further include a limiting member 5. The limting member 5 can be provided with a limiting groove 51. The limiting groove 51 can extend along the second direction B. In the retracted state, the end of the movable rod 22 away from the fixing rod 21 can be accommodated in the limiting groove 51. When the rotating grab rail 2 is rotated to the retracted state, the rotating grab rail 2 can extend along the second direction B. The movable rod 22 of the rotating grab rail 2 can move relative to the fixing rod 21 and be retracted into the fixing rod 21. The end of the movable rod 22 away from the fixing rod 21 can be accommodated in the limiting groove 51 extending along the second direction B. This can prevent the rotating grab rail 2 from occupying too much space in the retracted state, and the retraction of the movable rod 22 into the limiting groove 51 can also prevent the movable rod 22 from hitting other parts of the vehicle.

In an embodiment,as shown in Figures 17 and 18, when the second direction B is the left-right direction of the vehicle, the accommodation of the end of the movable rod 22 away from the fixing rod 21 in the limiting groove 51 can prevent the movable rod 22 from breaking the window 50 located on the side of the vehicle body.

In an embodiment, as shown in Figures 17 and 18, the limiting member 5 can be mounted on the fixed grab rail 20 of the vehicle.

To prevent the rotating grab rail 2 accommodated in the limiting groove 51 from shaking and making noise during the vehicle's driving, in an embodiment, as shown in Figure 18, the limiting groove 51 has two third sidewalls 511 opposite each other along the first direction A and a third bottom wall 512 located between the two third sidewalls 511. Third elastic limiting members 513 are disposed on both third sidewalls 512, and a third elastic buffer member 514 is disposed on the third bottom wall 512. In the retracted state, the movable rod 22 is clamped between the two third elastic limiting members 513 at one end away from the fixing rod 21.

When the rotating grab rail 2 is in the retracted state, due to the presence of the third elastic limiting members 513 on both third sidewalls 511 of the limiting groove 51, the rotating grab rail 2 accommodated in the limiting groove 51 can be clamped between the two third elastic limiting members 513. Under the clamping force of the two third elastic limiting members 513, the rotating grab rail 2 can be maintained in the limiting groove 51, and it can prevent the rotating grab rail 2 from shaking and making noise relative to the limiting groove 51 during vehicle driving. The third bottom wall 512 of the limiting groove 51 is provided with a third elastic buffer member 514, which can provide a buffering force for the rotating grab rail 2 when it falls into the limiting groove 51. The rotating grab rail 2 accommodated in the limiting groove 51 can be wrapped by the third elastic limiting member 513 and the third elastic buffer member 514, which can avoid direct contact between the rotating grab rail 2 and the two third sidewalls 511 and the third bottom wall 512 of the limiting groove 51, and prevent collision with the third sidewall 511 and the third bottom wall 512 during vehicle driving.

According to another aspect of the present disclosure, the present disclosure provides a vehicle including the above-described vehicle grab rail assembly 10.

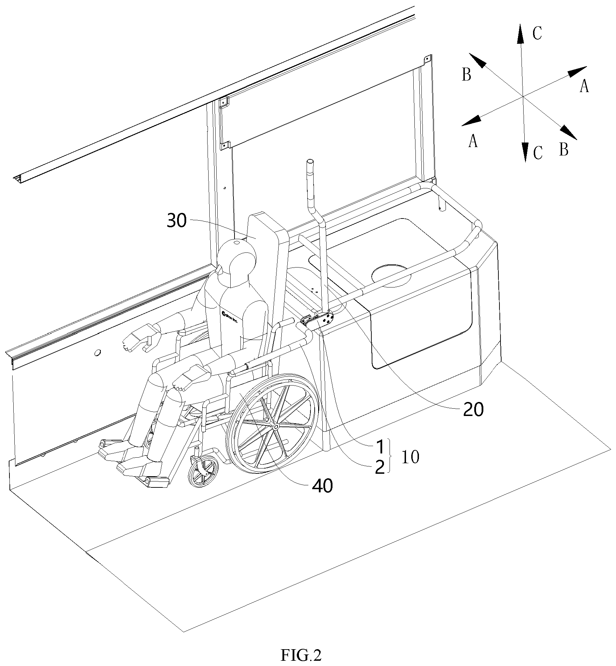

To avoid the rotating grab rail 2 occupying the standing space of passengers when in the retracted state, in an embodiment, as shown in Figures 1 and 2, the vehicle further includes a backrest 30. The mounting base 1 of the vehicle grab rail assembly 10 is located on one side of the backrest 30. In the use state, the rotating grab rail 2 is positioned at the side of the backrest 30, and in the retracted state, the rotating grab rail 2 is positioned behind the backrest 30. Since the mounting base1 is located on one side of the backrest 30, when the rotating grab rail 2 is rotated to the use state, the rotating grab rail 2 is positioned at the side of the backrest 30, which can be used as a handrail for the backrest 30. When the rotating grab rail 2 is rotated to the retracted state, the rotating grab rail 2 is positioned behind the backrest 30, thereby reducing the space occupied by the rotating grab rail 2 when in the retracted state, which is beneficial for improving the space utilization of the vehicle.

In an embodiment, as shown in Figures 1 and 2, when the passenger using the vehicle grab rail assembly 10 provided by the present disclosure is a wheelchair user, the wheelchair 40 can be parked in front of the vehicle's backrest 30, with the wheelchair's backrest leaning against the vehicle's backrest 30.

In an embodiment, the vehicle can also include wheelchair securing straps. When the wheelchair 40 is parked in front of the vehicle's backrest 30, the wheelchair 40 can be secured in place using the wheelchair securing straps, thereby preventing the wheelchair 40 from sliding.

To prevent the rotating grab rail 2 from breaking the window 50 located on the side of the vehicle body, in an embodiment, as shown in Figures 17 and 19, the vehicle further includes a fixed grab rail 20. The fixed grab rail 20 extends along the third direction C, and the third direction C is the up-down direction of the vehicle. The first direction A is the front-rear direction of the vehicle, and the second direction B is the left-right direction of the vehicle. The fixed grab rail 20 can be spaced apart from the side of the vehicle body in the left-right direction, and the mounting base 1 of the vehicle grab rail assembly 10 can be mounted on the fixed grab rail 20. The fixed grab rail 20 can be provided with a bent stopper 201, which can be located above the mounting base 1. The distance between the bent stopper 201 and the mounting base 1 in the up-down direction is greater than the minimum length of the rotating grab rail 2 of the vehicle grab rail assembly 10 and it is less than or equal to the distance between the bent stopper 201 and the side of the vehicle body in the left-right direction.

When the length of the rotating grab rail 2 is less than the distance D1 between the bent stopper 201 and the mounting base 1 in the up-down direction, the rotating grab rail 2 can pass through the bent stopper 201 and rotate to the retracted state. Since the distance D1 between the bent stopper 201 and the mounting base 1 in the up-down direction is less than or equal to the distance D2 between the bent stopper 201 and the side of the vehicle body in the left-right direction, when the rotating grab rail 2 passes through the bent stopper 201, the length of the rotating grab rail 2 is less than the distance D2 between the bent stopper 201 and the side of the vehicle body in the left-right direction, thereby preventing the rotating grab rail 2 from breaking the window 50 located on the side of the vehicle body. Since the distance D1 between the bent stopper 201 and the mounting base 1 in the up-down direction is greater than the minimum length of the rotating grab rail 2 of the vehicle grab rail assembly 10, it can ensure that when the movable rod 22 of the rotating grab rail 2 is fully retracted into the fixing rod 21, the rotating grab rail 2 can pass through the bending stop member 201 and then rotate to the retracted state.

The above description, in combination with the accompanying drawings, details the preferred embodiments of the present disclosure. However, the present disclosure is not limited to the specific details of the embodiments described above. Within the scope of the technical concept of the present disclosure, various simple variations can be made to the technical solutions of the present disclosure, and all these simple variations fall within the scope of protection of the present disclosure.

Furthermore, it should be noted that the various specific technical features described in the above specific embodiments can be combined in any suitable manner without contradiction. To avoid unnecessary repetition, the present disclosure does not separately describe various possible combinations of these features.

Moreover, any combination of the various different embodiments of the present disclosure is also possible, as long as it does not contradict the concept of the present disclosure. Such combinations are also considered to be part of the disclosure disclosed in the present disclosure.

## Claims

1. A vehicle grab rail assembly, comprising:
a mounting base (1);
a rotating grab rail (2), comprising:
a fixing rod (21), the fixing rod (21) being rotatably connected to the mounting base (1) along a first rotating axis (L1) extending in a first direction (A) and a second rotating axis (L2) extending in a second direction (B), the first direction being perpendicular to the second direction; and
a movable rod (22), the movable rod (22) being movably connected to the fixing rod (21) along a length direction of the rotating grab rail (2);
wherein the rotating grab rail (2) can switch between a use state and a retracted state, in the use state, the rotating grab rail (2) extends along the first direction (A), and in the retracted state, the rotating grab rail (2) extends along the second direction (B).

2. The vehicle grab rail assembly according to claim 1, wherein the rotating grab rail (2) further comprises a locking member (23) and an elastic member (24), and one end of the movable rod (22) is movably inserted into the fixing rod (21), and a plurality of locking holes (211) are formed in the fixing rod (21), the locking member (23) and the elastic member (24) are both arranged in the movable rod (22), a first through-hole (222) for the locking member (23) to pass through is formed in the movable rod (22) , and one end of the elastic member (24) abuts against the locking member (23), the elastic member (24) is used to apply an elastic force to the locking member (23) to move it towards the fixing rod (21), so that the locking member (23) can extend into the locking hole (211).

3. The vehicle grab rail assembly according to claim 2, wherein the rotating grab rail (2) further comprises a sliding sleeve (25) and a stop sleeve (26), wherein the sliding sleeve (25) is installed at one end of the movable rod (22) close to the mounting base (1), and the outer peripheral surface of the sliding sleeve (25) slides with the inner peripheral surface of the fixing rod (21), and there is a gap (8) between the outer peripheral surface of the movable rod (22) and the inner peripheral surface of the fixing rod (21);
the stop sleeve (26) is installed at one end of the fixing rod (21) away from the mounting base (1), and the stop sleeve (26) is used to stop the sliding sleeve (25).

4. The vehicle grab rail assembly according to any one of claim 1-3, further comprising a first shaft (3) and a second shaft (4), wherein the first shaft (3) extends along the first direction (A), the second shaft (4) extends along the second direction (B), and the second shaft (4) is rotatably connected to the first shaft (3), one end of the first shaft (3) is rotatably connected to the mounting base (1), the first rotating axis (A) is the central axis of the first rotating shaft (3), and the second rotating axis (B) is the central axis of the second rotating shaft (4);
a first groove (14) and a second groove (15) are formed on the mounting base (1), both of which are concaved along a third direction (C), the third direction (C) is perpendicular to both the first direction (A) and the second direction (B), and the first groove (14) extends in the first direction (A), the second groove (15) extends in the second direction (B), one end of the first groove (14) is formed as a first open end (145) that can be passed through by rotating grab rail (2), the other end of the first groove (14) is connected to the second groove (15), and one end of the second groove (15) is formed as a second open end (153) that can be passed through by the rotating grab rail (2);
in the use state, part of the rotating grab rail (2) is accommodated within the first groove (14), and in the retracted state, part of the rotating grab rail (2) is accommodated within the second groove 15.

5. The vehicle grab rail assembly according to claim 4, wherein the first groove (14) is provided with two first sidewalls (141) opposite each other in the second direction (B), and a first bottom wall (142) located between the two first sidewalls (141), and first elastic limiting members (143) are disposed on both first sidewalls (141), a first elastic buffer member (144) is disposed on the first bottom wall (142), and in the use state, the rotating grab rail (2) is clamped between the two first elastic limiting members (143); and/or,
the second groove (15) is provided with two second sidewalls (151) opposite each other along the first direction (A) and a second bottom wall (152) located between the two second sidewalls (151), and second elastic limiting members are disposed on both second sidewalls (151), a second elastic buffer member is disposed on the second bottom wall (152), in the retracted state, the rotating grab rail 2 is clamped between the two second elastic limiting members.

6. The vehicle grab rail assembly according to claim 4 or 5, wherein the mounting base (1) includes a first partition (11) and a second partition (12), the first partition (11) is provided with a mounting plate (111), and one end of the first shaft (3) is rotatably connected to the mounting plate (111), a first notch (112) is formed on the first partition (11), a second notch (121) is formed on the second partition (12) which is detachably connected to the first partition (11), and the first groove (14) is defined by the second partition (12) together with the first notch (112) , the second groove (15) is defined by the second notch (121) together with the mounting plate (111).

7. The vehicle grab rail assembly according to any one of claim 1-6,wherein the mounting base (1) is provided with a through hole (16) which is designed for the fixed grab rail (20) of the vehicle to pass through, and the mounting base (1) includes a first partition (11) and a third partition (13), with the first partition (11) having a first half-hole (113) and the third partition (13) having a second half-hole (131), the first partition (11) is detachably connected to the third partition (13), so that the first half-hole (113) and the second half-hole (131) can be assembled to form the through hole (16).

8. The vehicle grab rail assembly according to any one of claim 1-7, further comprising a limiting member (5) which is provided with a limiting groove (51), and the limiting groove (51) extending along the second direction (B), in the retracted state, the end of the movable rod (22) away from the fixing rod (21) can be accommodated in the limiting groove (51).

9. The vehicle grab rail assembly according to claim 8, wherein the limiting groove (51) is provided with two third sidewalls (511) opposite each other along the first direction (A) and a third bottom wall (512) located between the two third sidewalls (511), third elastic limiting members (513) are disposed on both third sidewalls (512), a third elastic buffer member (514) is disposed on the third bottom wall (512), and in the retracted state, the movable rod (22) is clamped between the two third elastic limiting members (513) at one end away from the fixing rod (21).

10. A vehicle, **characterized by** including a vehicle grab rail assembly (10) according to any one of claims 1-9.

11. The vehicle according to claim 10, further comprising a backrest (30), the mounting base (1) of the vehicle grab rail assembly (10) being located on one side of the backrest (30), and in the use state, the rotating grab rail (2) being positioned at the side of the backrest (30), in the retracted state, the rotating grab rail (2) being positioned behind the backrest (30).

12. The vehicle according to claim 10 or 11, further comprising a fixed grab rail (20) extending along a third direction (C), which is the up-down direction of the vehicle, and the first direction (A) being the front-rear direction of the vehicle, the second direction (B) being the left-right direction of the vehicle, the fixed grab rail (20) being spaced apart from the side of the vehicle body along the left- right direction, and the mounting base (1) of the vehicle grab rail assembly (10) being installed on the fixed grab rail (20);
a bent stopper (201) being formed on the fixed grab rail (20), locating above the mounting base (1), the distance between the bent stopper (20) and the mounting base (1) in the vertical direction being greater than the minimum length of the rotating grab rail (2) of the vehicle grab rail assembly (10) and less than or equal to the distance between the bent stopper (201) and the side of the vehicle body in the left-right direction.
